# EUROPEAN PATENT APPLICATION

(11) **EP 0 592 134 A2**
(43) Date of publication of application: **13.04.1994**
(21) Application number: 93307628.3
(22) Date of filing: 27.09.1993
(51) Int. Cl.: G01M 15/00

(54) **Complementary method for detecting misfires in internal combustion engines**

(30) Priority: 05.10.1992 US 956229
(71) Applicant: FORD MOTOR COMPANY LIMITED, Brentwood, Essex CM13 3BW (GB); FORD FRANCE S. A., F-92506 Rueil-Malmaison Cédex (FR); FORD-WERKE AKTIENGESELLSCHAFT, D-50735 Köln (DE)
(72) Inventor: Marko, Kenneth Andrew, Ann Arbor, Michigan 48104 (US); Bryant, Bruce David, Royal Oak, Michigan 48073 (US); James, John Victor, Walled Lake, Michigan 48330 (US)
(74) Representative: Messulam, Alec Moses

(57) **Abstract**

Misfiring of individual cylinders in an internal combustion engine is detected based on simultaneous use of two different methods of misfire detection which examine different combustion-related parameters of engine operation, such as crankshaft acceleration and exhaust gas pressure. A complementary detector (57) produces a final misfire determination based on the simultaneously obtained misfire determinations in order to provide greater coverage of the speed-load range of the engine and to provide increased confidence and accuracy in calling misfires in the portion of the speed-load range where both misfire methods are presumed to function.

## Description

The present invention relates in general to detecting misfires occurring during normal in-use vehicle operation of internal combustion engines, and more specifically to identifying the occurrence of individual misfires in each engine cylinder.

Catalytic converters are used in automobiles to reduce the amount of pollutants in the engine exhaust. When a cylinder misfires so that no combustion or incomplete combustion occurs, uncombusted fuel is introduced into the exhaust which then burns in the hot catalytic converter. The added heat from fuel burning in the catalytic converter tends to destroy the catalyst. Thus, it is desirable to detect and count engine misfires and signal the operator of the vehicle upon occurrence of excessive misfires so that steps may be taken to protect the catalytic converter.

Various methods have been employed in the prior art to detect misfires, such as monitoring of engine crankshaft accelerations, monitoring of electrical properties of the ignition spark and monitoring of various properties of the exhaust gas, including exhaust gas pressure and exhaust gas temperature.

Each prior art technique has certain advantages and limitations. Specifically, prior art techniques have suffered from inadequate coverage of the entire speed-load range of an in-use vehicle engine. Furthermore, the confidence in any detection of a misfire in a cylinder varies depending on numerous factors, such as signal-to-noise ratio and processing limitations.

As an advantage of the present invention, coverage of the speed-load range of an engine is increased and confidence in detection of misfire is improved using a complementary method whereby independently derived misfire detection signals are combined to produce a single final misfire determination for each cylinder firing. Thus, an apparatus for monitoring misfires in an internal combustion engine comprises first detector means for detecting misfire by sensing a first combustion-related parameter of the engine and producing a first misfire determination for each individual cylinder event. The first misfire determination has a first accuracy rate which varies within an engine operating area. A second detector means detects misfire by sensing a second combustion parameter of the engine and produces a second misfire determination for each individual cylinder event. The second misfire determination has a second accuracy rate which varies within the engine operating area. The invention further comprises sensing means for sensing an instantaneous operating point within the engine operating area and complementary detection means coupled to the first detector means, the second detector means, and the sensing means for producing a final misfire determination for each individual cylinder event in response to respective first and second misfire determinations and a respective instantaneous operating point. The first combustion-related parameter may be crankshaft acceleration and the second combustion-related parameter may be exhaust gas pressure, for example.

The invention will now be described further, by way of example, with reference to the accompanying drawings, in which:

Figure 1 illustrates components and processing employed in a crankshaft acceleration misfire detector.

Figure 2 is a block diagram showing misfire detection using exhaust gas pressure.

Figure 3 divides the speed-load range of an engine into regions of good and poor signal-to-noise ratio obtained by a crankshaft acceleration misfire detector.

Figure 4 divides the speed-load range of an engine into regions of good and poor signal-to-noise ratio obtained by an exhaust pressure misfire detector.

Figure 5 is a block diagram showing a preferred embodiment of the complementary misfire detector of the present invention.

Figure 6 shows the speed-load range of an engine divided into regions wherein one or another of a misfire detection technique has best performance.

Figure 7 shows another embodiment including a third region wherein both misfire detection techniques provide acceptable accuracy.

Figure 8 is a decision matrix for obtaining a complementary misfire detection result from independently generated misfire detection signals.

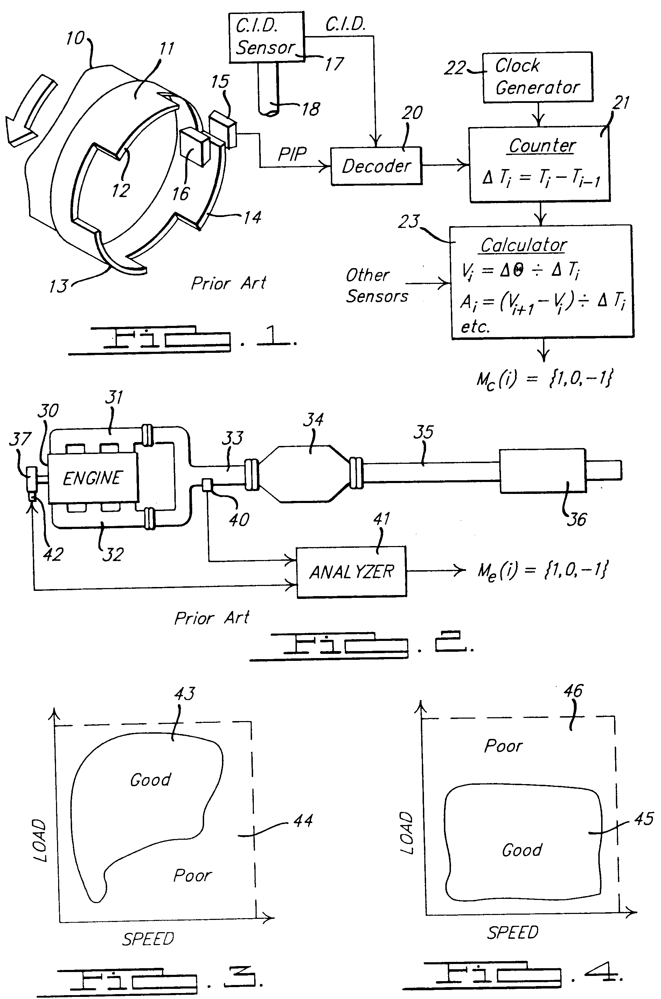

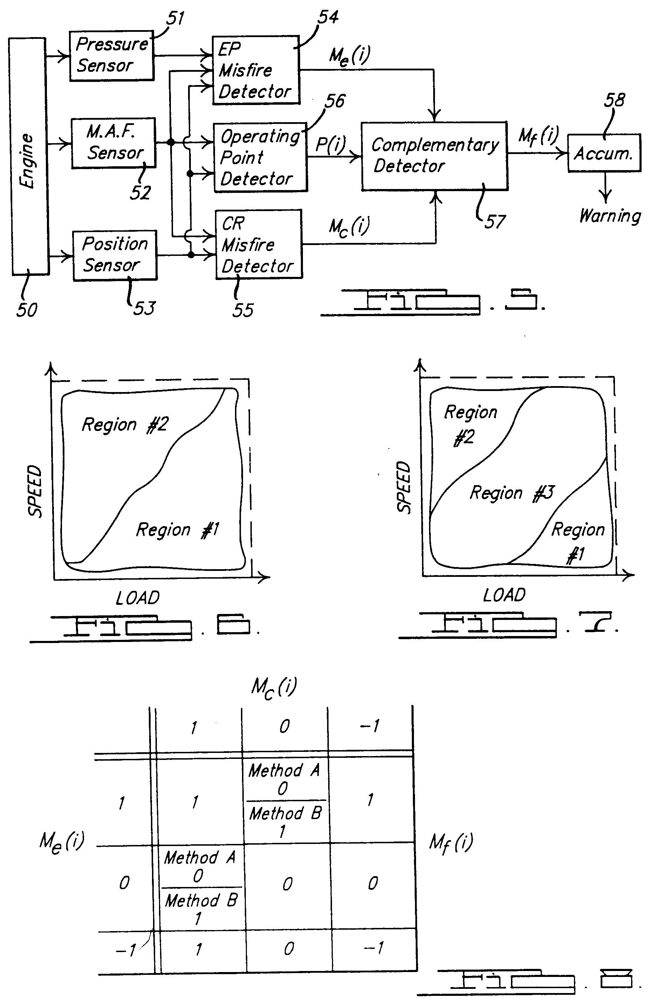

The present invention employs independently derived misfire detection signals from at least two independent misfire detection techniques, and the independent misfire detection signals are combined in a complementary fashion to increase confidence in the accuracy of misfire detection and to increase the speed-load range coverage for misfire detection. In a preferred embodiment, one independent misfire technique is provided by crankshaft acceleration detection as shown in Figure 1 and exhaust gas pressure detection as shown in Figure 2.

The crankshaft acceleration method for detecting misfires is based on position detection of the crankshaft, measuring time intervals between selected crankshaft positions, calculation of acceleration,, and additional processing in order to classify each cylinder event as a misfire or a proper firing. As shown in Figure 1, a wheel 11 is mounted on a crankshaft 10 of an internal combustion engine. Wheel 11 includes vanes 12, 13, and 14 which pass between a hall sensor 15 and a permanent magnet 16 during rotation of the crankshaft to generate a profile ignition pulse (PIP) signal to identify crankshaft position. Vanes 12-14 are typically arranged to generate a rising PIP signal from the hall sensor just before top dead centre of each respective cylinder, (e.g., 100 before TDC). A rising PIP signal actually indicates the approach to top dead centre of two engine cylinders, one of which is on a power stroke and another of which is on an intake stroke. Crankshaft position can alternatively be detected using a variable reluctance (VR) sensor and a multi toothed wheel, as is known in the art.

A cylinder identification (CID) sensor 17 is connected to a camshaft 18 of the engine for identifying which of the two cylinders is actually on its power stroke. Since camshaft 18 rotates once for every two rotations of crankshaft 10, a CID signal is generated having a rising edge corresponding to a known position relative to top dead centre in the power stroke of a predetermined cylinder, e.g., cylinder No. 1.

A decoder receives the PIP signal and the CID signal and provides reference marker signals to a counter 21. A clock signal is provided to counter 21 from a clock generator 22. An elapsed time signal ΔTᵢ is determined by counter 21, which is provided to a calculator 23 which derives a corresponding velocity measure Vᵢ and an acceleration measurement Aᵢ. Calculator 23 is connected to other sensors and performs other calculations to produce a misfire determination M_{c}(i) having a value of 1 to indicate a misfire, 0 to indicate a normal firing and -1 to indicate a "no-call" (i.e., when a reliable result cannot be determined). A crankshaft acceleration method for detecting misfire is further described in U.S. Patent 5,044,195 and U.S. Patent 5,109,695, both incorporated herein by reference.

This invention incorporates a second type of misfire detection, such as the prior art technique of monitoring engine exhaust pressure as shown in Figure 2. An internal combustion engine 30 includes a right hand exhaust manifold 31 and a left hand exhaust manifold 32 joined to an exhaust conduit 33. Exhaust gases from engine 30 flow through manifolds 31 and 32 and conduit 33 to a catalytic converter 34, a conduit 35 and a muffler 36. Engine 30 drives an output shaft 37, such as a crankshaft or a camshaft. A pressure transducer 40 is in communication with the exhaust manifold via exhaust conduit 33, as shown. An analog pressure signal from transducer 40 is coupled to an analyser 41 including an analog-to-digital converter (not shown). In response to position signals from a position generator 42, analyser 41 produces formatted digitised pressure data which is used to identify individual cylinder misfires. Analyser 41 preferably implements a data classifier (i.e., a pattern recognition system preferably using a neural network simulation program) to produce a misfire recognition signal Mₑ(i) having a value of 1 to indicate a misfire, a value of 0 indicate a proper firing, and -i to indicate a "no call". Further details of a system of the type shown in Figure 2 are provided in co-pending U.S. Serial No. 07/892,883, filed June 3, 1992, which is incorporated herein by reference.

Various techniques of misfire detection have their own respective limitations and reliability depending upon various engine parameters. For example, a crankshaft acceleration method as shown in Figure 1 may have an overall performance as shown in Figure 3. Over the speed/load operating range of the internal combustion engine, the crankshaft acceleration misfire detector provides good accuracy over a region 43 (which is less than the full speed-load range of the engine). A region 44 corresponds to speed-load operating points where the crankshaft acceleration technique of misfire detection exhibits relatively poor accuracy. It has been shown that in the crankshaft acceleration method, accuracy tends to be poorer at high speeds and/or low load conditions.

Figure 4 shows performance of a typical exhaust pressure misfire detector as shown in Figure 2. A region 45 of good accuracy is more uniform over the speed-load range of the engine but may include an area of poor accuracy at region 46, for example. The two misfire detection techniques are complementary in the sense that the sum of good regions 43 and 45 include more of the full speed-load range of the engine than either good region alone. The crankshaft acceleration method has best performance at medium speeds and loads, while the exhaust pressure method has best performance at high speeds and loads (because there is a higher pressure difference between firing and misfiring cylinders at high speed and load). Furthermore, the two techniques can be used simultaneously to reduce errors occurring in the overlap area of good regions 43 and 45. This is especially important when detecting individual misfire events due to the large number of cylinder firings during vehicle operation so that even a very low error rate may still result in a large number of incorrect misfire determinations.

In addition to speed and load parameters, the operating condition of an engine can be represented using various parameters, such as exhaust gas recirculation valve position, spark advance, and transmission gear. It may be desirable in some instances to define engine operating areas using these additional parameters, however, the most significant parameters are speed and load. Therefore, the preferred embodiment is described below using two-dimensional speed-load operating areas.

One embodiment of a complementary misfire detector according to the present invention is shown in Figure 5. A multi-cylinder engine 50 is associated with a plurality of engine sensors, such as a pressure sensor 51, a mass air flow (MAF) sensor 52, and a position sensor 53, preferably comprising a crankshaft and a camshaft sensor to produce PIP and CID signals. A first misfire detector is shown as an exhaust pressure (EP) misfire detector 54 which receives input signals from sensors 51-53. A second misfire detector is shown as a crankshaft (CR) misfire detector 55 which receives input signals from MAF sensor 52 and position sensor 53. An operating point detector 56 receives input signals from MAF sensor 52 and position sensor 53 and generates an instantaneous operating point output signal P(i). A complementary detector 57 receives a first misfire determination Mₑ(i) from EP misfire detector 54, a second misfire determination M_{c}(i) from CR misfire detector 55, and instantaneous operating point P(i) from operating point detector 56. A final misfire determination M_{f}(i) is provided from complementary detector 57 to an accumulator 58 which generates a warning signal whenever final misfire determination M_{f}(i) indicates excessive misfires.

In operation, EP misfire detector 54 forms a misfire determination for each individual cylinder firing based upon pressure data for an engine cycle from pressure sensor 51 and position data from position sensor 53. EP misfire detector 54 further employs engine load information from MAF sensor 52 to determine whether engine 50 is operating at a load condition wherein misfire detection by pressure sensing is unreliable and a no-call (i.e., -1) should be generated in first misfire determination Mₑ(i) . CR misfire detector 55 determines crankshaft acceleration using position data from position sensor 53 and normalises the acceleration by expected engine torque using engine load information from MAF sensor 52. CR misfire detector 55 may generate a no-call in second misfire determination M_{c}(i) based on measured noise in position signals or based on engine load and RPM.

Operating point detector 56 determines in which of several regions of the speed-load range of the engine the engine is currently operating. As shown in Figure 6, the operating point detector employs a speed-load map including at least two regions, a region #1 wherein the accuracy rate of CR misfire detector 55 is best and a region #2 wherein the accuracy rate of EP misfire detector 54 is best. Instantaneous operating point signal P(i) has a value of 1 -to indicate that the instantaneous operating point is within region #1 and has a value of 2 to indicate that the instantaneous operating point is located in region #2. Regions #1 and #2 are predetermined depending upon the expected performance of EP misfire detector 54 and CR misfire detector 55. In one embodiment for predefining the locations covered by region #1 and region #2, the signal-to-noise ratios of each misfire detector are compared at each point within the speed-load range of the engine and the corresponding operating point falls to region #1 or #2 depending on which signal-to-noise ratio is highest. As shown in Figures 3 and 4, crankshaft acceleration misfire detection provides better accuracy at high load and exhaust pressure misfire detection provides better accuracy at high speeds. Therefore, Figure 6 provides a region #1 corresponding to higher loads and a region #2 corresponding to higher speeds. When instantaneous operating point signal P(i) has a value of 1, complementary detector 57 produces a final misfire determination M_{f}(i) equal to the crankshaft misfire determination M_{c}(i). Likewise, when P(i) has a value of 2, M_{f}(i) is equal to Mₑ(i).

As shown in Figure 7, a third region #3 can also be employed wherein the accuracy rates of both misfire detectors are acceptable and both misfire determinations are examined to produce the final misfire determination. Thus, operating point detector 56 provides an output P(i) equal to 3 when the instantaneous operating point falls within region #3 wherein both misfire detectors produce good accuracy. Complementary detector 57 then employs a decision matrix such as shown in Figure 8 to generate a final misfire determination. If M_{c}(i) is equal to Mₑ(i), i.e., both are 1, 0, or -1, then M_{f}(i) has the same value. If one of the misfire determinations has a value of -1 (indicating a no-call from that misfire detector), then the final misfire determination equals the misfire determination that did not equal -1. If one misfire determination indicates a misfire (i.e., equals 1) while the other misfire determination indicates a proper firing (i.e., equals 0) then complementary detector 57 must arbitrate between the two determinations. In the preferred embodiment, a method A is employed wherein the final misfire determination equals 0 to indicate a proper firing in the case of a disagreement between the first and second misfire determinations. Since it is an object of the present invention to provide low error rate, method A is preferred since the error rate in the final misfire determination becomes the product of the error rates of the separate detection techniques thereby providing a greatly reduced false alarm rate, i.e, the error rate in cylinder firings which are finally determined to be a misfire. However, in some applications it may be most important to catch all misfires (i.e., have a low error rate in the determinations of proper firings) in which case a method B would be employed wherein the final misfire determination indicates a misfire in the event of a disagreement between the first and second misfire determinations.

## Claims

1. Apparatus for monitoring misfires in an internal combustion engine (50) having a plurality of cylinders, comprising:
first detector means (54) for detecting misfire by sensing a first combustion-related parameter of said engine and producing a first misfire determination for each individual cylinder event, said first misfire determination having a first accuracy rate which varies within an engine operating area;
second detector means (55) for detecting misfire by sensing a second combustion-related parameter of said engine and producing a second misfire determination for each individual cylinder event, said second misfire determination having a second accuracy rate which varies within said engine operating area;
sensing means (56) for sensing an instantaneous operating point within said engine operating area; and
complementary detection means (57) coupled to said first detector means (54), said second detector means (55), and said sensing means (56) for producing a final misfire determination for each said individual cylinder event in response to respective first and second misfire determinations and a respective instantaneous operating point.

2. An apparatus as claimed in 1, wherein said first accuracy rate is determined in response to a first signal-to-noise ratio which is variable with said instantaneous operating point, wherein said second accuracy rate is determined in response to a second signal-to-noise ratio which is variable with said instantaneous operating point, and wherein said complementary detection means produces a respective final misfire determination corresponding to either the respective first misfire determination or the respective second misfire determination in response to said first and second signal-to-noise ratios.

3. An apparatus as claimed in claim 2, wherein said first or second misfire determination is chosen as, said respective final misfire determination according to whether said first signal-to-noise ratio or said second signal-to-noise ratio is greater at said instantaneous operating point.

4. An apparatus as claimed in claim 1, wherein said first combustion-related parameter is crankshaft acceleration and wherein said second combustion-related parameter is exhaust gas pressure.

5. An apparatus as claimed in claim 1, wherein said engine operating area is determined by speed and load ranges of said engine.

6. A apparatus as claimed in claim 1, wherein: said complementary detection means includes means for defining a first region of said engine operating area wherein said first accuracy rate provides acceptable reliability of misfire detection but said second accuracy rate does not and means for defining a second region of said engine operating area wherein said second accuracy rate provides acceptable reliability of misfire detection but said first accuracy rate does not; and said final misfire determination equals said first misfire determination when the respective instantaneous operating point is within said first region and wherein said final misfire determination equals said second misfire determination when the respective instantaneous operating point is within said second region.

7. An apparatus as claimed in claim 6, wherein: said complementary detection means further includes means for defining a third region of said engine operating area wherein said first and second accuracy rates are each above a predetermined accuracy rate; and said final misfire determination is a function of both respective first and second misfire determinations when the respective instantaneous operating point is within said third region.

8. Apparatus for monitoring misfires in an internal combustion engine having a plurality of cylinders, comprising:
first detector means for detecting misfire by sensing a first combustion-related parameter of said engine and producing a first misfire determination for each individual cylinder event, said first misfire determination having a first accuracy rate which varies within an engine operating area;
second detector means for detecting misfire by sensing a second combustion-related parameter of said engine and producing a second misfire determination for each individual cylinder event, said second misfire determination having a second- accuracy rate which varies within said engine operating area;
sensing means for sensing operating parameters of said internal combustion engine defining an instantaneous operating point within said engine operating area;
region means for defining a first region within said engine operating area wherein said first and second accuracy rates are each above a predetermined accuracy rate; and
complementary detection means coupled to said first detector means, said second detector means, and said sensing means for producing a final misfire determination for each said individual cylinder event as a function of the respective first and second misfire determinations when said instantaneous operating point is within said first region.

9. An apparatus as claimed in claim 1, 7 or 8, wherein said function of said first and second misfire determinations generates a final misfire determination indicating a misfire if either of said respective first and second misfire determinations indicates a misfire.

10. An apparatus as claimed in claim 1, 7 or 8, wherein said function of said first and second misfire determinations generates a final misfire determination indicating a misfire only if both of said respective first and second misfire determinations indicate a misfire.
